# EUROPEAN PATENT SPECIFICATION

(11) **EP 3 677 855 B1**
(45) Date of publication and mention of the grant of the patent: **18.10.2023**
(21) Application number: 19814159.0
(22) Date of filing: 20.02.2019
(51) Int. Cl.: F25B 1/00, F25B 1/10, F25B 9/00, F25B 30/02, F25B 49/02, F25B 1/04, F25B 41/34, F25B 41/385

(54) **REFRIGERATION CYCLE DEVICE AND LIQUID HEATING DEVICE HAVING THE SAME**
KÄLTEKREISLAUFVORRICHTUNG UND FLÜSSIGKEITSERHITZUNGSVORRICHTUNG DAMIT
DISPOSITIF À CYCLE FRIGORIFIQUE ET DISPOSITIF DE CHAUFFAGE DE LIQUIDE LE COMPRENANT

(30) Priority: 07.06.2018 JP 2018109107
(43) Date of publication of application: 08.07.2020
(73) Proprietor: Panasonic Intellectual Property Management Co., Ltd., Osaka-shi, Osaka 540-6207 (JP)
(72) Inventor: AOYAMA, Shigeo, Osaka-shi, Osaka 540-6207 (JP); YAMAOKA, Yuki, Osaka-shi, Osaka 540-6207 (JP); NAKATANI, Kazuhito, Osaka-shi, Osaka 540-6207 (JP); IMAGAWA, Tsuneko, Osaka-shi, Osaka 540-6207 (JP); KOISHIHARA, Kazuki, Osaka-shi, Osaka 540-6207 (JP); MORIWAKI, Shunji, Osaka-shi, Osaka 540-6207 (JP); MACHIDA, Kazuhiko, Osaka-shi, Osaka 540-6207 (JP); HSU, Chihsuan, Osaka-shi, Osaka 540-6207 (JP)
(74) Representative: Eisenführ Speiser
(86) International application number: PCT/JP2019/006196
(87) International publication number: WO 2019/234986

(56) References cited:
- WO-A1-2011/135616
- WO-A1-2017/061233
- JP-A- 2004 044 883
- JP-A- 2009 198 019
- JP-A- 2009 204 235
- JP-A- 2011 080 634
- JP-A- 2011 185 507
- JP-A- 2013 011 391
- JP-A- 2014 134 366
- JP-A- 2014 134 366
- JP-A- 2014 169 854
- JP-A- 2014 169 854
- US-A1- 2013 000 340
- US-B2- 8 020 393
- US-B2- 9 389 005

## Description

### [TECHNICAL FIELD]

The present invention relates to a refrigeration cycle device and a liquid heating device having the same.

### [BACKGROUND TECHNIQUE]

As a conventional refrigeration device of this kind, there is disclosed a configuration of a refrigeration cycle device in which refrigerant branched off from between a condenser provided on a high pressure side and a subcooling heat exchanger is decompressed by an auxiliary electric expansion valve and then, after the refrigerant passes through the condenser, the refrigerant exchanges heat with high pressure refrigerant which flows on the side of the main electric expansion valve in the subcooling heat exchanger and thereafter, the refrigerant flows toward a low pressure side or an intermediate pressure side, i.e., the refrigeration cycle device has injection function (see patent document 1 for example).

Fig. 7 shows a structure of the conventional refrigeration cycle device described in patent document 1.

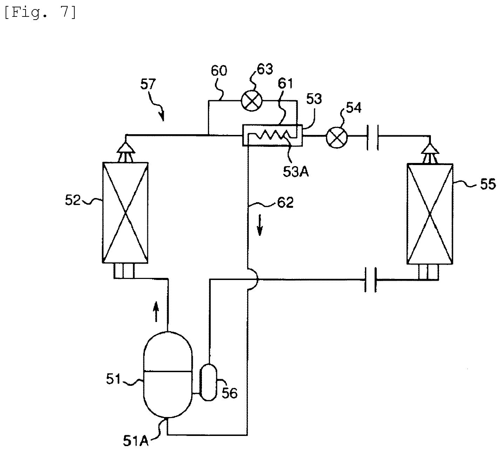

As shown in Fig. 7, the conventional refrigeration device includes a main circuit 57. The main circuit 57 is formed by connecting a compressor 51, a condenser 52, a subcooling heat exchanger 53, a main electric expansion valve 54, an evaporator 55 and an accumulator 56 in this order.

A branch pipe 60 branched off from the main circuit 57 between the condenser 52 and the subcooling heat exchanger 53 is connected to an inner pipe 53A of the subcooling heat exchanger 53. The inner pipe 53A extends from downstream to upstream of a main flow in an outer pipe 61, and is connected to an injection pipe 62. The branch pipe 60 includes an auxiliary electric expansion valve 63. The injection pipe 62 is connected to a portion 51A of intermediate pressure of the compressor 51.

From Patent Document 2, a refrigerating-cycle apparatus, which uses R32 as a refrigerant, and a warm water production apparatus using this refrigerating-cycle apparatus are known. A refrigerant circuit includes a compressor, a heat radiator, an overcooling heat exchanger, a main expansion valve, an evaporator, a four-way valve, a sub-accumulator and a main accumulator, connected by refrigerant piping. A water supply pipe and a water collection pipe are connected to the heat radiator. A bypass, comprising a bypass expansion device, branches between the overcooling heat exchanger and the main expansion valve, and is connected to the refrigerant circuit between the evaporator and the compressor via the overcooling heat exchanger. Thereby, an excessive raise of the refrigerant discharge temperature from the compressor is prevented, and a decline in operational efficiency is suppressed. Patent Document 2 also discloses a control device adjusting the opening degrees of the main and the bypass expansion devices when a low pressure detected by a low pressure-side detector is lower than a predetermined value.

### [PRIOR ART DOCUMENTS]

### ΓPATENT DOCUMENTS]

[Patent Document 1]
Japanese Patent Application Laid-open No.2000-274859 [Patent Document 2]
Japanese Patent Application 2014-169854

### [SUMMARY OF THE INVENTION]

### [PROBLEM TO BE SOLVED BY THE INVENTION]

However, the conventional refrigeration device has a problem that when an endothermic energy amount of the evaporator 55 is lowered and a heat amount is insufficient in the condenser 55, since the amount of heat which can be absorbed in the evaporator 55 is limited, if a flow rate of refrigerant flowing through the auxiliary electric expansion valve 63 set smaller than a flow rate of refrigerant flowing through the main electric expansion valve 54, a necessary heating amount cannot be obtained in the condenser 55.

The present invention has been accomplished to solve the conventional problem, and it is an object of the invention to provide a refrigeration cycle device having injection function capable of obtaining a necessary heat amount in a usage-side heat exchanger even when an amount of heat which can be absorbed in the heat source-side heat exchanger.

### [MEANS FOR SOLVING THE PROBLEM]

To solve the conventional problem, the present invention provides a refrigeration cycle device according to independent claim 1.

According to this, when the amount of heat which can be absorbed in the heat source-side heat exchanger is small, refrigerant is distributed such that the flow rate of refrigerant flowing toward the bypass refrigerant circuit through the second expansion device becomes larger than the flow rate of refrigerant flowing toward the heat source-side heat exchanger through the first expansion device.

As a result, when the amount of heat which can be absorbed in the heat source-side heat exchanger is small, the flow rate of refrigerant flowing through the bypass refrigerant circuit becomes larger than the flow rate of refrigerant flowing through the main refrigerant circuit, and since pressure of refrigerant flowing through the bypass refrigerant circuit is higher than that of refrigerant of the main refrigerant circuit sucked from the heat source-side heat exchanger into the compression mechanism, density of the refrigerant also becomes high, and a mass flow rate of refrigerant flowing through the bypass refrigerant circuit is also increased and therefore, a flow rate of the entire refrigerant which is discharged from the compression mechanism and which flows into the usage-side heat exchanger is increased and not only that, heating ability in the usage-side heat exchanger can be enhanced.

### [EFFECT OF THE INVENTION]

The present invention can provide a refrigeration cycle device capable of obtaining a heating amount in a usage-side heat exchanger even when the amount of heat which can be absorbed in a heat source-side heat exchanger is small.

### [BRIEF DESCRIPTION OF THE DRAWINGS]

Fig. 1 is a block diagram of a liquid heating device in an embodiment of the present invention;
Fig. 2 is a pressure-enthalpy diagram (P-h diagram) under an ideal condition concerning a refrigeration cycle;
Fig. 3 is a characteristic diagram showing a relation between an opening degree difference between a second expansion device and a first expansion device of a refrigeration cycle device and evaporating temperature of a heat source-side heat exchanger;
Fig. 4 is a characteristic diagram showing a relation between the opening degree difference of the second expansion device and the first expansion device of the refrigeration cycle device and a temperature difference between predetermined temperature in a usage-side heat medium circuit and temperature of a usage-side heat medium heated by a usage-side heat exchanger;
Fig. 5 is a flowchart for setting the opening degrees of the second expansion device and the first expansion device based on evaporating temperature of the heat source-side heat exchanger of the refrigeration cycle device;
Fig. 6 is a flowchart for setting opening degrees of the second expansion device and the first expansion device in the refrigeration cycle device based on a temperature difference between predetermined temperature in the usage-side heat medium circuit and temperature of usage-side heat medium heated by the usage-side heat exchanger; and
Fig. 7 is a block diagram of a conventional refrigeration cycle device.

### [MODE FOR CARRYING OUT THE INVENTION]

A first embodiment according to the present invention provides a refrigeration cycle device according to independent claim 1.

According to this, when the amount of heat which can be absorbed in the heat source-side heat exchanger is small, refrigerant is distributed such that the flow rate of refrigerant flowing toward the bypass refrigerant circuit through the second expansion device becomes larger than the flow rate of refrigerant flowing toward the heat source-side heat exchanger through the first expansion device.

As a result, when the amount of heat which can be absorbed in the heat source-side heat exchanger is small, the flow rate of refrigerant flowing through the bypass refrigerant circuit becomes larger than the flow rate of refrigerant flowing through the main refrigerant circuit, and since pressure of refrigerant flowing through the bypass refrigerant circuit is higher than that of refrigerant of the main refrigerant circuit sucked from the heat source-side heat exchanger into the compression mechanism, density of the refrigerant also becomes high, and a mass flow rate of refrigerant flowing through the bypass refrigerant circuit is also increased and therefore, a flow rate of the total refrigerant which is discharged from the compression mechanism and which flows into the usage-side heat exchanger is increased and not only that, heating ability in the usage-side heat exchanger can be enhanced.

According to a second embodiment according to the present invention, especially in the first embodiment, the refrigeration cycle device further includes a high pressure-side detector for detecting pressure of the refrigerant on a high pressure side of the main refrigerant circuit, wherein when a detected value detected by the high pressure-side detector is lower than predetermined pressure, the control device adjusts the opening degrees of the first expansion device and the second expansion device, and makes the flow rate of the refrigerant flowing through the second expansion device larger than the flow rate of the refrigerant flowing through the first expansion device.

According to this, when an amount of heat which can be absorbed in the heat source-side heat exchanger is small and a heating amount is insufficient in the usage-side heat exchanger, refrigerant is distributed such that the flow rate of refrigerant flowing toward the bypass refrigerant circuit through the second expansion device becomes larger than the flow rate of refrigerant flowing toward the bypass refrigerant circuit through the second expansion device.

As a result, when the amount of heat which can be absorbed in the heat source-side heat exchanger is small and the heating amount is insufficient in the usage-side heat exchanger, the flow rate of refrigerant flowing through the bypass refrigerant circuit becomes larger than the flow rate of refrigerant flowing through the main refrigerant circuit, and since pressure of refrigerant flowing through the bypass refrigerant circuit is higher than pressure of refrigerant of the main refrigerant circuit sucked from the heat source-side heat exchanger into the compression mechanism, density of the refrigerant also becomes high and a mass flow rate of the refrigerant flowing through the bypass refrigerant circuit is also increased. Therefore, a flow rate of the entire refrigerant which is discharged from the compression mechanism and which flows into the usage-side heat exchanger is increased and not only that, heating ability in the usage-side heat exchanger can be enhanced.

According to a third embodiment, especially in the first or second embodiment, carbon dioxide is used as the refrigerant, and the pressure of the refrigerant after it is decompressed by the second expansion device exceeds critical pressure.

According to this, in the usage-side heat exchanger, temperature of the usage-side heat medium when it is heated by refrigerant can be made high.

A fourth embodiment provides a liquid heating device including the refrigeration cycle device according to any one of claims 1 to 3 and a usage-side heat medium circuit, wherein the usage-side heat medium circuit circulates the usage-side heat medium by a conveying device.

According to this, it is possible to provide a liquid heating device capable of increasing temperature of the usage-side heat medium when it is heated by refrigerant.

According to a fifth embodiment, especially in the fourth embodiment, the liquid heating device further includes a heat medium outlet temperature thermistor for detecting temperature of the usage-side heat medium which flows out from the usage-side heat exchanger, wherein when detected temperature detected by the heat medium outlet temperature thermistor is lower than predetermined temperature and a temperature difference between the predetermined temperature and the detected temperature detected by the heat medium outlet temperature thermistor is larger than a predetermined temperature difference, the control device adjusts the opening degrees of the first expansion device and the second expansion device, and makes the flow rate of the refrigerant flowing through the second expansion device larger than the flow rate of the refrigerant flowing through the first expansion device.

According to this, when an amount of heat which can be absorbed in the heat source-side heat exchanger is small and a heating amount is insufficient in the usage-side heat exchanger, refrigerant is distributed such that the flow rate of refrigerant flowing toward the bypass refrigerant circuit through the second expansion device becomes larger than the flow rate of refrigerant flowing toward the bypass refrigerant circuit through the second expansion device.

As a result, when the amount of heat which can be absorbed in the heat source-side heat exchanger is small and the heating amount is insufficient in the usage-side heat exchanger, the flow rate of refrigerant flowing through the bypass refrigerant circuit becomes larger than the flow rate of refrigerant flowing through the main refrigerant circuit, and since pressure of refrigerant flowing through the bypass refrigerant circuit is higher than pressure of refrigerant of the main refrigerant circuit sucked from the heat source-side heat exchanger into the compression mechanism, density of the refrigerant also becomes high and a mass flow rate of the refrigerant flowing through the bypass refrigerant circuit is also increased. Therefore, a flow rate of the entire refrigerant which is discharged from the compression mechanism and which flows into the usage-side heat exchanger is increased and not only that, heating ability in the usage-side heat exchanger can be enhanced.

An embodiment of the present invention will be described below with reference to the drawings. The invention is not limited to the embodiment. The scope of the invention is solely defined by the appended claims.

An embodiment of the present invention will be described below with reference to the drawings.

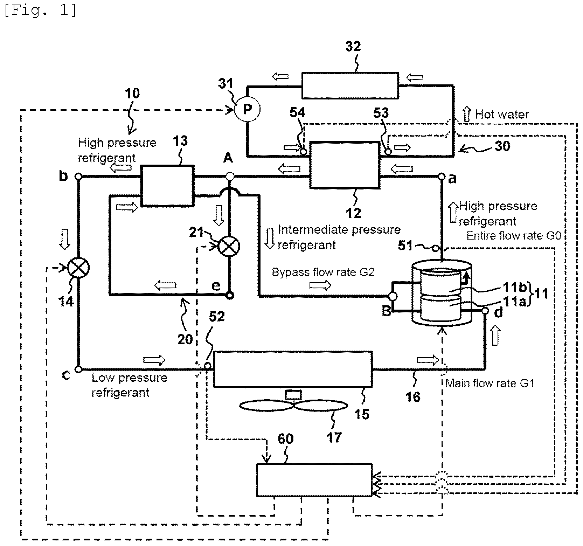

Fig. 1 is a block diagram of a liquid heating device according to the embodiment of the invention.

The liquid heating device is composed of a refrigeration cycle device and a usage-side heat medium circuit 30. The refrigeration cycle device is composed of a main refrigerant circuit 10 and a bypass refrigerant circuit 20.

The main refrigerant circuit 10 is formed by sequentially connecting, through a pipe 16, a compression mechanism 11, a usage-side heat exchanger 12 which is a radiator, an intermediate heat exchanger 13, a first expansion device 14 and a heat source-side heat exchanger 15 which is an evaporator. Carbon dioxide (CO₂) is used as refrigerant.

The compression mechanism 11 is composed of a low stage-side compression rotation element 11a and a high stage-side compression rotation element 11b. The usage-side heat exchanger 12 heats usage-side heat medium by refrigerant discharged from the high stage-side compression rotation element 11b. A volume ratio of the low stage-side compression rotation element 11a and the high stage-side compression rotation element 11b which configure the compression mechanism 11 is constant, a driving shaft (not shown) is commonly used, and the liquid heating device is composed of one compressor placed in one container.

Although this embodiment is described using the compression mechanism 11 in which the compression rotation element is composed of the low stage-side compression rotation elements 11a and the high stage-side compression rotation elements 11b, the present invention can also be applied to a single compression rotation element. When the single compression rotation element is used, a position where refrigerant from the bypass refrigerant circuit 20 joins up is defined as a middle stage location of the compression rotation element, a compression rotation element up to the position where the refrigerant from the bypass refrigerant circuit 20 joins up is defined as the low stage-side compression rotation elements 11a, and a compression rotation element after the former position where the refrigerant from the bypass refrigerant circuit 20 joins up is defined as the high stage-side compression rotation elements 11b.

The compression mechanism 11 may be composed of the low stage-side compression rotation elements 11a and the high stage-side compression rotation elements 11b each of which is composed of two independent compressors.

The bypass refrigerant circuit 20 branches off from the pipe 16 between the usage-side heat exchanger 12 and the first expansion device 14 and is connected to the pipe 16 between the low stage-side compression rotation elements 11a and the high stage-side compression rotation elements 11b.

The bypass refrigerant circuit 20 is provided with a second expansion device 21. A portion of high pressure refrigerant after it passes through the usage-side heat exchanger 12 or a portion of high pressure refrigerant after it passes through the intermediate heat exchanger 13 is decompressed by the second expansion device 21 and becomes intermediate pressure refrigerant. Thereafter, the intermediate pressure refrigerant exchanges heat with high pressure refrigerant which flows through the main refrigerant circuit 10 in the intermediate heat exchanger 13, and joins up with refrigerant between the low stage-side compression rotation elements 11a and the high stage-side compression rotation elements 11b.

The usage-side heat medium circuit 30 is formed by sequentially connecting the usage-side heat exchanger 12, a conveying device 31 which is a conveying pump and a heating terminal 32 through a heat medium pipe 33. Water of antifreeze liquid is used as the usage-side heat medium.

Thee usage-side heat medium circuit 30 is provided with a heat medium outlet temperature thermistor 53 and a heat medium inlet temperature thermistor 54. The heat medium outlet temperature thermistor 53 detects temperature of usage-side heat medium which flows out from the usage-side heat exchanger 12. The heat medium inlet temperature thermistor 54 detects temperature of usage-side heat medium which flows into the usage-side heat exchanger 12. The usage-side heat medium is circulated through the usage-side heat medium circuit 30 by the conveying device 31, and a room is heated by the heating terminal 32 by means of the usage-side heat medium which is heated by the usage-side heat exchanger 12.

A control device 60 operates the low stage-side compression rotation element 11a and the high stage-side compression rotation element 11b, and heats circulating water by the usage-side heat exchanger 12. The control device 60 operates the conveying device 31 such that a temperature difference of the circulating water, i.e., a temperature difference between detected temperature of the heat medium outlet temperature thermistor 53 and detected temperature of the heat medium inlet temperature thermistor 54 becomes equal to a target temperature difference.

If a heating amount is insufficient in the usage-side heat exchanger 12, since control is performed such that the temperature difference between the detected temperature of the heat medium outlet temperature thermistor 53 and the detected temperature of the heat medium inlet temperature thermistor 54 becomes equal to the target temperature difference, the detected temperature of the heat medium outlet temperature thermistor 53 and the detected temperature of the heat medium inlet temperature thermistor 54 do not rise to the predetermined temperature. Therefore, the detected temperature of the heat medium outlet temperature thermistor 53 is lower than the predetermined temperature and a temperature difference between the predetermined temperature and the detected temperature of the heat medium outlet temperature thermistor 53 is larger than a predetermined temperature difference.

The main refrigerant circuit 10 is provided with a high pressure side pressure detecting device 51 in the pipe 16 on the discharge side of the high stage-side compression rotation element 11b. The high pressure side pressure detecting device 51 is provided on the main refrigerant circuit 10 from the discharge side of the high stage-side compression rotation element 11b to the upstream side of the first expansion device 14. It is only necessary that the high pressure side pressure detecting device 51 can detect pressure of high pressure refrigerant of the main refrigerant circuit 10.

The pipe 16 which connects the first expansion device 14 and the heat source-side heat exchanger 15 of the main refrigerant circuit 10 to each other is provided with an evaporating temperature thermistor 52 which detects evaporating temperature on the low pressure side. To detect the evaporating temperature of refrigerant (in gas-liquid two layer state) on the low pressure side, the control device 60 may calculate the evaporating temperature from a pressure value detected by a pressure detecting device without using a temperature thermistor. Further, a temperature thermistor may be provided around the heat source-side heat exchanger 15, and temperature of air which supplies heat to the heat source-side heat exchanger 15 by operating a fan may be detected using the temperature thermistor instead of the evaporating temperature.

The control device 60 controls valve opening degrees of the first expansion device 14 and the second expansion device 21 by detected temperature of the evaporating temperature thermistor 52 which functions as a low pressure-side detector, by a detected pressure value of the pressure detecting device, or by temperature of air which supplies heat to the heat source-side heat exchanger 15.

Further, the control device 60 controls the valve opening degrees of the first expansion device 14 and the second expansion device 21 by a detected pressure value of the high pressure side pressure detecting device 51 which functions as a high pressure-side detector.

Further, the control device 60 controls the valve opening degrees of the first expansion device 14 and the second expansion device 21 by detected temperature of the heat medium outlet temperature thermistor 53.

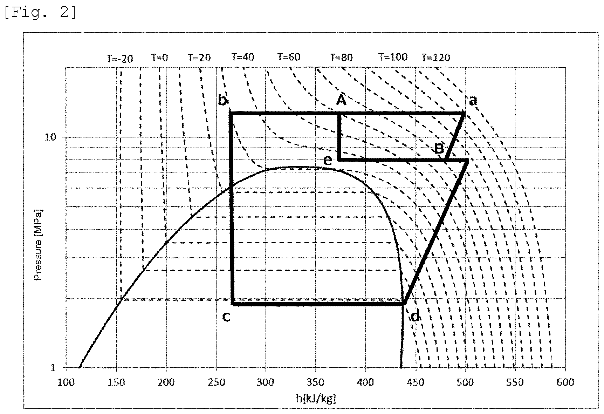

Fig. 2 is a pressure-enthalpy diagram (P-h diagram) under an ideal condition concerning a refrigeration cycle device of this embodiment. Fig. 2 shows a state where pressure of refrigerant after it is decompressed by the second expansion device 21 exceeds critical pressure.

Points a to e and A and B in Figs. 2 correspond to points in the liquid heating device shown in Fig. 1.

First, high pressure refrigerant (point a) discharged from the high stage-side compression rotation element 11b radiates heat in the usage-side heat exchanger 12 and after that, the high pressure refrigerant branches off from the main refrigerant circuit 10 at a refrigerant branch point A, the high pressure refrigerant is decompressed to intermediate pressure by the second expansion device 21 and becomes intermediate pressure refrigerant (point e), and the refrigerant is heat-exchanged by the intermediate exchanger 13.

The high pressure refrigerant which flows through the main refrigerant circuit 10 after it radiates heat by the usage-side heat exchanger 12 is cooled by intermediate pressure refrigerant (point e) which flows through the bypass refrigerant circuit 20, and the high pressure refrigerant is decompressed by the first expansion device 14 in a state (point b) where enthalpy thereof is reduced.

According to this, refrigerant enthalpy of refrigerant (point c) which flows into the heat source-side heat exchanger 15 after it is decompressed by the first expansion device 14 is also reduced. Dryness (weight ratio occupied by gas phase component to the entire refrigerant) of refrigerant when it flows into the heat source-side heat exchanger 15 is reduced and liquid component of refrigerant is increased. Therefore, this contributes to evaporation in the heat source-side heat exchanger 15, a refrigerant ratio is increased and an endothermic energy amount from outside air is increased, and it returns to the suction side (point d) of the low stage-side compression rotation element 11a.

On the other hand, refrigerant of an amount corresponding to gas phase component which does not contribute to evaporation in the heat source-side heat exchanger 15 is made to bypass by the bypass refrigerant circuit 20, and becomes low temperature intermediate pressure refrigerant (point e), the refrigerant is heated by high pressure refrigerant which flows through the main refrigerant circuit 10 in the intermediate exchanger 13, and the refrigerant reaches a refrigerant joining point B located between the low stage-side compression rotation element 11a and the high stage-side compression rotation element 11b in a state where refrigerant enthalpy is increased.

Therefore, on the suction side of the high stage-side compression rotation element 11b (point B), since refrigerant pressure is higher than that on the suction side of the low stage-side compression rotation element 11a (point d), refrigerant density is also high, and refrigerant which joins up refrigerant discharged from the low stage-side compression rotation element 11a is sucked, further compressed by the high stage-side compression rotation element 11b and is discharged. Therefore, a flow rate of the refrigerant which flows into the usage-side heat exchanger 12 is largely increased, and ability of heating water which is usage-side heat medium is largely enhanced.

When detected temperature of the evaporating temperature thermistor 52 which functions as a low pressure-side detector, detected pressure of the pressure detecting device, or temperature of air which supplies heat to the heat source-side heat exchanger 15 is lower than a predetermined value (reference value), the control device 60 adjusts the valve opening degrees of the first expansion device 14 and the second expansion device 21, and a flow rate of refrigerant flowing through the second expansion device 21 is made larger than a flow rate of refrigerant flowing through the first expansion device 14.

When detected pressure of the high pressure side pressure detecting device 51 which functions as a high pressure-side detector is lower than predetermined pressure (target pressure value), the control device 60 adjusts the valve opening degrees of the first expansion device 14 and the second expansion device 21, and the flow rate of refrigerant flowing through the second expansion device 21 is made larger than the flow rate of refrigerant flowing through the first expansion device 14.

Further, when detected temperature detected by the heat medium outlet temperature thermistor 53 is lower than predetermined temperature and a temperature difference between the predetermined temperature and a detected value detected by the heat medium outlet temperature thermistor 53 is larger than a predetermined temperature difference, the valve opening degrees of the first expansion device 14 and the second expansion device 21 are adjusted, and the flow rate of refrigerant flowing through the second expansion device 21 is made larger than the flow rate of refrigerant flowing through the first expansion device 14.

That is, the control device 60 operates such that the valve opening degree of the first expansion device 14 becomes small and the valve opening degree of the second expansion device 21 becomes large, and the flow rate of refrigerant flowing through the second expansion device 21 is made larger than the flow rate of refrigerant flowing through the first expansion device 14.

As a result, as shown in Fig. 2, a circulation amount of refrigerant flowing between the usage-side heat exchanger 12 and the bypass refrigerant circuit 20 is increased, and pressure of refrigerant after it is decompressed by the second expansion device 21, i.e., suction pressure of the high stage-side compression rotation element 11b exceeds the critical pressure. According to this, heating ability of refrigerant in the usage-side heat exchanger 12 can be enhanced.

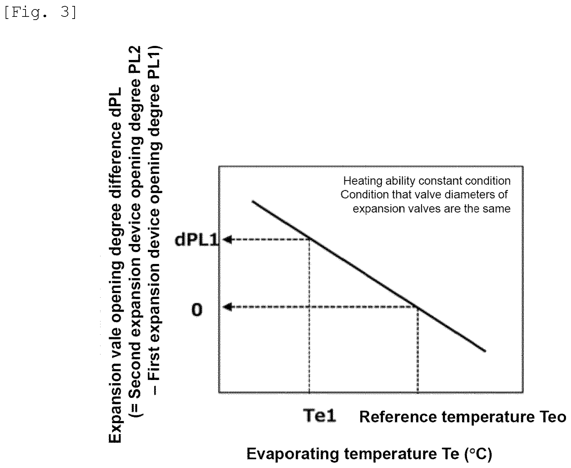

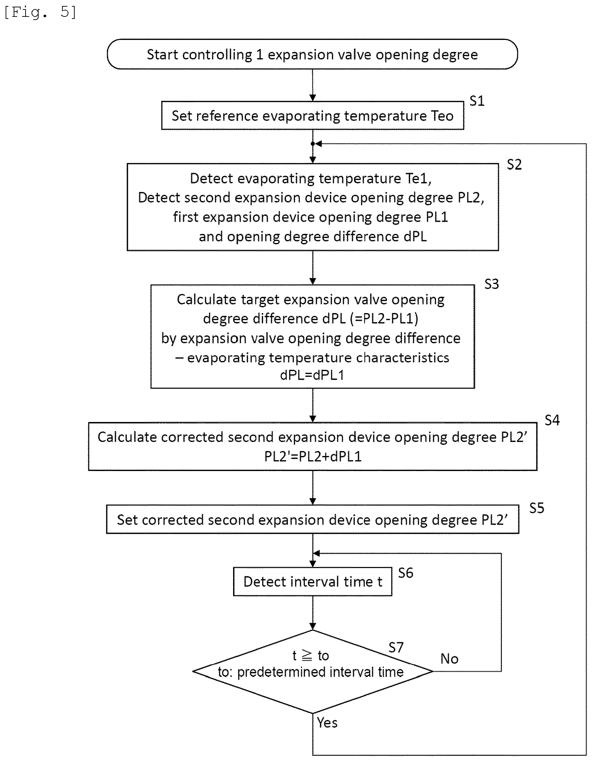

Next, when a detected value detected by the evaporating temperature thermistor 52 which functions as a low pressure-side detector or detected by the pressure detecting device, or temperature of air which supplies heat to the heat source-side heat exchanger 15 is lower than the predetermined value (reference value), the control device 60 adjusts the valve opening degrees of the first expansion device 14 and the second expansion device 21, and controls such that the flow rate of the refrigerant flowing through the second expansion device 21 becomes larger than the flow rate of refrigerant flowing through the first expansion device 14. This control will be described using Figs. 3 and 5. In this embodiment, valve diameters of the first expansion device 14 and the second expansion device 21 are the same.

A relation between low pressure-side evaporating temperature Te detected by the evaporating temperature thermistor 52, and an opening degree difference dPL between a second expansion device opening degree PL2 and a first expansion device opening degree PL1 is previously input in the control device 60 as characteristic expression.

That is, as shown in Fig. 3, the characteristic expression is set such that when the evaporating temperature is reference evaporating temperature Teo, an opening degree difference between the second expansion device opening degree PL2 and the first expansion device opening degree PL1 is 0, and as the evaporating temperature Te becomes lower, the opening degree of the second expansion device opening degree PL2 becomes larger than the opening degree of the first expansion device opening degree PL1.

Next, a flowchart for setting the second expansion device opening degree PL2 and the first expansion device opening degree PL1 will be described based on Fig. 5.

First, reference refrigerant temperature Teo is set in S1. Next, in S2, the evaporating temperature thermistor 52 detects the evaporating temperature Te1 under a predetermined operational condition of the refrigeration cycle device, and detects the second expansion device opening degree PL2 and the first expansion device opening degree PL1 which correspond to the evaporating temperature Te1.

Then, in S3, an expansion valve opening degree difference dPL (=PL2-PL1) is calculated, and a target expansion valve opening degree difference dPL=dPL1 is set.

Next, in S4, a current opening degree PL2 of the second expansion device 21 is corrected, corrected second expansion device opening degree PL2'=PL2+dPL1 is calculated. In S5, an opening degree is set such that the current opening degree PL2 of the second expansion device 21 becomes equal to the second expansion device opening degree PL2'.

Thereafter, interval time t is detected in S6, the interval time t is compared with predetermined interval time to in S7, and if t≥to, operations of S2 to S5 are repeated.

According to this, when the evaporating temperature Te in the heat source-side heat exchanger 15 is lower than the reference evaporating temperature Teo, the opening degree of the second expansion device 21 is set larger than the opening degree of the first expansion device 14 by dPL1. Therefore, refrigerant is distributed such that the flow rate of refrigerant flowing through the second expansion device 21 becomes larger than the flow rate of refrigerant flowing through the first expansion device 14.

In this case, even when a parameter which functions as a low pressure-side detector is a detected value detected by a low pressure-side pressure detecting device or even when the parameter is temperature of air which supplies heat to the heat source-side heat exchanger 15, if the parameter is a reference value, the opening degree difference between the second expansion device opening degree PL2 and the first expansion device opening degree PL1 is 0, and the relation that as the detected value detected by the low pressure-side detector becomes lower than the reference value, the opening degree of the second expansion device opening degree PL2 becomes larger than the opening degree of the first expansion device opening degree PL1 is the same as a relation of the case of the evaporating temperature Te.

When a detected value detected by the high pressure side pressure detecting device 51 which functions as the high pressure-side detector is lower than predetermined pressure (target pressure value), the valve opening degrees of the first expansion device 14 and the second expansion device 21 are adjusted and the flow rate of refrigerant flowing through the second expansion device 21 is made larger than the flow rate of refrigerant flowing through the first expansion device 14. In this case also, when the detected value is a parget pressure value, the opening degree difference between the second expansion device opening degree PL2 and the first expansion device opening degree PL1 is 0, and the relation that as the value becomes lower than the target pressure value, the opening degree of the second expansion device opening degree PL2 becomes larger than the opening degree of the first expansion device opening degree PL1 is the same as a relation of the case of the evaporating temperature Te.

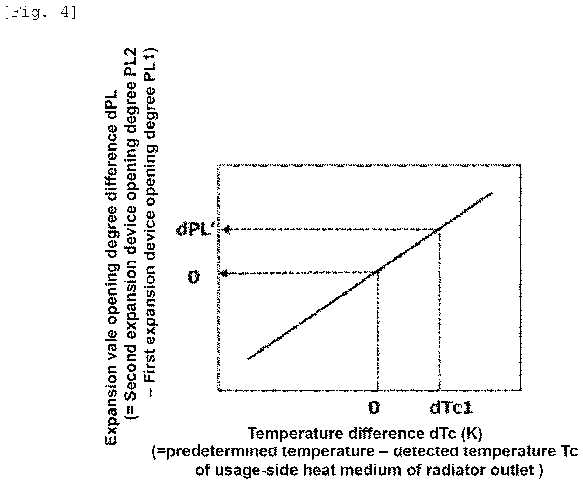

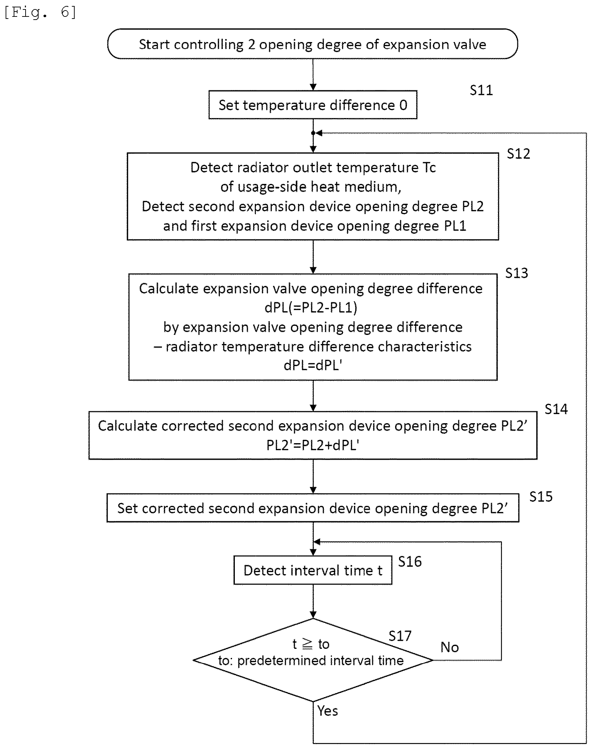

Next, when a detected value detected by the heat medium outlet temperature thermistor 53 is lower than the predetermined temperature and a temperature difference between the predetermined temperature and the detected value detected by the heat medium outlet temperature thermistor 53 is larger than a predetermined temperature difference, the valve opening degrees of the first expansion device 14 and the second expansion device 21 are adjusted, and control is performed such that the flow rate of refrigerant flowing through the second expansion device 21 becomes larger than the flow rate of refrigerant flowing through the first expansion device 14. This control will be explained using Figs. 4 and 6. In this embodiment, valve diameters of the first expansion device 14 and the second expansion device 21 are the same.

A relation between a temperature difference (dTc) between the predetermined temperature and detected temperature Tc detected by the heat medium outlet temperature thermistor 53, and an opening degree difference dPL between the second expansion device opening degree PL2 and the first expansion device opening degree PL1 is previously input in the control device 60 as characteristic expression.

That is, as shown in Fig. 4, when there is no temperature difference (temperature difference=0), the opening degree difference between the second expansion device opening degree PL2 and the first expansion device opening degree PL1 is 0, and a relation is established such that as the temperature difference (dTc) becomes larger, the opening degree of the second expansion device opening degree PL2 becomes larger than the opening degree of the first expansion device opening degree PL1.

A flowchart for setting the second expansion device opening degree PL2 and the first expansion device opening degree PL1 will be described below based on Fig. 6.

First, a temperature difference 0 is set in S11. Then, in S12, the heat medium outlet temperature thermistor 53 detects temperature Tc of usage-side heat medium under a predetermined operational condition of the liquid heating device, and the second expansion device opening degree PL2 and the first expansion device opening degree PL1 corresponding to the temperature Tc are detected.

In S13, an expansion valve opening degree difference dPL (=PL2-PL1) is calculated and a target expansion valve opening degree difference dPL=dPL' is set.

Next, in S14, a current opening degree PL2 of the second expansion device 21 is corrected and a corrected second expansion device opening PL2'=PL2+dPL' is calculated. In S15, and the opening degree is set such that current opening degree PL2 of the second expansion device 21 becomes equal to a corrected second expansion device opening degree PL2'.

Thereafter, interval time t is detected in S16, the interval time t is compared with predetermined interval time to in S17, and if t≥to, the operations in S12 to S15 are repeated.

According to this, when a detected value detected by the heat medium outlet temperature thermistor 53 is lower than the predetermined temperature and a temperature difference between the predetermined temperature and the detected value detected by the heat medium outlet temperature thermistor 53 is larger than a predetermined temperature difference, the opening degree of the second expansion device 21 is set larger than the opening degree of the first expansion device 14 by dPL'. Therefore, refrigerant is distributed such that the flow rate of refrigerant flowing through the second expansion device 21 becomes larger than the flow rate of refrigerant flowing through the first expansion device 14.

As described above, when the amount of heat which can be absorbed in the heat source-side heat exchanger 15 is small and the heating amount is insufficient in the usage-side heat exchanger 12, the flow rate (G2) of refrigerant flowing through the bypass refrigerant circuit 20 is made larger than the flow rate (G1) of refrigerant flowing through the main refrigerant circuit 10 as shown in Fig. 1. According to this, since pressure of refrigerant flowing through the bypass refrigerant circuit 20 is higher than pressure of refrigerant of the main refrigerant circuit 10 which is sucked from the heat source-side heat exchanger 15 into the compression mechanism 11, density of the refrigerant also becomes high, and a mass flow rate of refrigerant flowing through the bypass refrigerant circuit 20 is also increased. Therefore, the flow rate (G0) of the entire refrigerant which is discharged from the compression mechanism 11 and flows into the usage-side heat exchanger 12 is increased and not only this, heating ability in the usage-side heat exchanger 12 can be enhanced.

### [INDUSTRIAL APPLICABILITY]

As described above, the refrigeration cycle device of the present invention is composed of the main refrigerant circuit including the intermediate heat exchanger and the bypass refrigerant circuit. Even when the amount of heat which can be absorbed in the heat source-side heat exchanger is small, a necessary heating amount can be obtained in the usage-side heat exchanger. Therefore, the invention is useful for a freezing device, an air conditioner, a hot water supplying system, a heating device and the like using a refrigeration cycle device.

### [EXPLANATION OF SYMBOLS]

- 10: main refrigerant circuit
- 11: compression mechanism
- 11a: low stage-side compression rotation element
- 11b: high stage-side compression rotation element
- 12: usage-side heat exchanger
- 13: intermediate heat exchanger
- 14: first expansion device
- 15: heat source-side heat exchanger
- 16: pipe
- 17: fan
- 20: bypass refrigerant circuit
- 21: second expansion device
- 30: usage-side heat medium circuit
- 31: conveying device
- 32: heating terminal
- 51: high pressure side pressure detecting device (high pressure-side detector)
- 52: evaporating temperature thermistor (low pressure-side detector)
- 53: heat medium outlet temperature thermistor
- 54: heat medium inlet temperature thermistor
- 60: control device

## Claims

1. A refrigeration cycle device comprising:
a main refrigerant circuit (10) formed by sequentially connecting, to one another through a pipe (16), a compression mechanism (11) composed of a compression rotation element (11a, 11b), a usage-side heat exchanger (12) for heating usage-side heat medium by refrigerant discharged from the compression rotation element, an intermediate heat exchanger (13), a first expansion device (14) and a heat source-side heat exchanger (15);
a bypass refrigerant circuit (20) comprising a second expansion device (21) branched off from the pipe (16) between the usage-side heat exchanger (12) and the first expansion device (14);
a low pressure-side detector (52) for detecting temperature of the refrigerant on a low pressure side of the main refrigerant circuit (10), or pressure of the refrigerant on the low pressure side of the main refrigerant circuit (10), or temperature of air which passes through the heat source-side heat exchanger (15);
wherein the bypass refrigerant circuit (20) is configured such that refrigerant in the bypass refrigerant circuit (20), branched from the pipe (16) between the usage-side heat exchanger (12) and the first expansion device (14) is decompressed by the second expansion device (21), thereafter, heat of the refrigerant is exchanged with that of the refrigerant flowing through the main refrigerant circuit (10) by the intermediate heat exchanger (13), and the refrigerant joins up with refrigerant which is in middle of a compression operation of the compression rotation element (11a, 11b);
the refrigeration cycle device further comprising a control device (60), wherein
when a detected value detected by the low pressure-side detector (52) is lower than a predetermined value,
the control device (60) adjusts opening degrees of the first expansion device (14) and the second expansion device (21), and
the control device (60) makes a flow rate of refrigerant flowing through the second expansion device (21) larger than a flow rate of refrigerant flowing through the first expansion device (14).

2. The refrigeration cycle device according to claim 1, further comprising a high pressure-side detector for detecting pressure of the refrigerant on a high pressure side of the main refrigerant circuit, wherein when a detected value detected by the high pressure-side detector is lower than predetermined pressure, the control device (60) adjusts the opening degrees of the first expansion device (14) and the second expansion device (21), and makes the flow rate of the refrigerant flowing through the second expansion device (21) larger than the flow rate of the refrigerant flowing through the first expansion device.

3. The refrigeration cycle device according to claim 1 or 2, wherein carbon dioxide is used as the refrigerant, and the pressure of the refrigerant after it is decompressed by the second expansion device (21) exceeds critical pressure.

4. A liquid heating device comprising the refrigeration cycle device according to any one of claims 1 to 3 and a usage-side heat medium circuit (30), wherein the usage-side heat medium circuit (30) circulates the usage-side heat medium by a conveying device (31).

5. The liquid heating device according to claim 4, further comprising a heat medium outlet temperature thermistor (53) for detecting temperature of the usage-side heat medium which flows out from the usage-side heat exchanger (12), wherein when a detected temperature detected by the heat medium outlet temperature thermistor (53) is lower than a predetermined temperature and a temperature difference between the predetermined temperature and the detected temperature detected by the heat medium outlet temperature thermistor (53) is larger than a predetermined temperature difference, the control device (60) adjusts the opening degrees of the first expansion device (14) and the second expansion device (21), and makes the flow rate of the refrigerant flowing through the second expansion device (21) larger than the flow rate of the refrigerant flowing through the first expansion device (14).

## Patentansprüche

1. Kältekreislaufvorrichtung, umfassend:
einen Haupt-Kältemittelkreislauf (10), der gebildet ist durch sequentielles miteinander Verbinden einer ein Kompressionsrotationselement (11a, 11b) umfassenden Kompressionseinrichtung (11), eines verbrauchsseitigen Wärmetauschers (12) zum Erwärmen eines verbrauchsseitigen Wärmeträgers durch ein aus dem Kompressionsrotationselement austretendes Kältemittel, eines Zwischenwärmetauschers (13), einer ersten Expansionsvorrichtung (14) und eines wärmequellenseitigen Wärmetauschers (15) durch eine Rohrleitung (16);
einen Bypass-Kältemittelkreislauf (20) mit einer zweiten Expansionsvorrichtung (21), der von der Rohrleitung (16) zwischen dem verbrauchsseitigen Wärmetauscher (12) und der ersten Expansionsvorrichtung (14) abzweigt;
einen niederdruckseitigen Detektor (52) zum Erfassen einer Temperatur des Kältemittels auf einer Niederdruckseite des Haupt-Kältemittelkreislaufs (10), oder eines Drucks des Kältemittels auf der Niederdruckseite des Haupt-Kältemittelkreislaufs (10), oder einer Temperatur der Luft, die durch den wärmequellenseitigen Wärmetauscher (15) strömt; wobei
der Bypass-Kältemittelkreislauf (20) so konfiguriert ist, dass Kältemittel in dem Bypass-Kältemittelkreislauf (20), das von der Rohrleitung (16) zwischen dem verbrauchsseitigen Wärmetauscher (12) und der ersten Expansionsvorrichtung (14) abgezweigt wird, durch die zweite Expansionsvorrichtung (21) dekomprimiert wird, wonach die Wärme des Kältemittels mit der des durch den Haupt-Kältemittelkreislauf (10) strömenden Kältemittels über den Zwischenwärmetauscher (13) ausgetauscht wird und das Kältemittel sich mit dem Kältemittel vereinigt, das sich in der Mitte eines Kompressionsvorgangs des Kompressionsrotationselements (11a, 11b) befindet;
die Kältekreislaufvorrichtung ferner eine Steuervorrichtung (60) umfasst, wobei die Steuervorrichtung (60) die Öffnungsgrade der ersten Expansionsvorrichtung (14) und der zweiten Expansionsvorrichtung (21) anpasst, wenn ein von dem niederdruckseitigen Detektor (52) erfasster Wert niedriger als ein vorbestimmter Wert ist, und
die Steuervorrichtung (60) eine Strömungsrate des durch die zweite Expansionsvorrichtung (21) strömenden Kältemittels größer als eine Strömungsrate des durch die erste Expansionsvorrichtung (14) strömenden Kältemittels macht.

2. Kältekreislaufvorrichtung nach Anspruch 1, ferner umfassend einen hochdruckseitigen Detektor zum Erfassen eines Drucks des Kältemittels auf einer Hochdruckseite des Haupt-Kältemittelkreislaufs, wobei dann, wenn ein von dem hochdruckseitigen Detektor erfasster Wert niedriger als ein vorbestimmter Druck ist, die Steuervorrichtung (60) die Öffnungsgrade der ersten Expansionsvorrichtung (14) und der zweiten Expansionsvorrichtung (21) anpasst und die Strömungsrate des durch die zweite Expansionsvorrichtung (21) strömenden Kältemittels größer als die Strömungsrate des durch die erste Expansionsvorrichtung strömenden Kältemittels macht.

3. Kältekreislaufvorrichtung nach Anspruch 1 oder 2, wobei Kohlendioxid als Kältemittel verwendet wird und der Druck des Kältemittels, nachdem es durch die zweite Expansionsvorrichtung (21) dekomprimiert wurde, den kritischen Druck überschreitet.

4. Flüssigkeitsheizvorrichtung, umfassend die Kältekreislaufvorrichtung nach einem der Ansprüche 1 bis 3 und einen verbrauchsseitigen Wärmeträgerkreislauf (30), wobei der verbrauchsseitige Wärmeträgerkreislauf (30) den verbrauchsseitigen Wärmeträger durch eine Fördervorrichtung (31) umwälzt.

5. Flüssigkeitsheizvorrichtung nach Anspruch 4, ferner umfassend einen Wärmeträger-Auslasstemperatur-Thermistor (53) zum Erfassen einer Temperatur des verbrauchsseitigen Wärmeträgers, der aus dem verbrauchsseitigen Wärmetauscher (12) austritt, wobei dann, wenn eine von dem Wärmeträger-Auslasstemperatur-Thermistor (53) erfasste Temperatur niedriger als eine vorgegebene Temperatur ist und eine Temperaturdifferenz zwischen der vorgegebenen Temperatur und der von dem Wärmeträger-Auslasstemperatur-Thermistor (53) erfassten Temperatur größer als eine vorgegebene Temperaturdifferenz ist, die Steuervorrichtung (60) die Öffnungsgrade der ersten Expansionsvorrichtung (14) und der zweiten Expansionsvorrichtung (21) anpasst und die Strömungsrate des durch die zweite Expansionsvorrichtung (21) strömenden Kältemittels größer als die Strömungsrate des durch die erste Expansionsvorrichtung (14) strömenden Kältemittels macht.

## Revendications

1. Dispositif à cycle de réfrigération comprenant :
un circuit de fluide frigorigène principal (10) formé par liaison séquentielle, l'un à l'autre par l'intermédiaire d'un tuyau (16), d'un mécanisme de compression (11) composé d'un élément rotatif de compression (11a, 11b), d'un échangeur de chaleur côté utilisation (12) destiné à chauffer le milieu thermique côté utilisation par le fluide frigorigène évacué de l'élément rotatif de compression, d'un échangeur de chaleur intermédiaire (13), d'un premier dispositif d'expansion (14) et d'un échangeur de chaleur côté source de chaleur (15) ;
un circuit de fluide frigorigène de dérivation (20) comprenant un second dispositif d'expansion (21) ramifié à partir du tuyau (16) entre l'échangeur de chaleur côté utilisation (12) et le premier dispositif d'expansion (14) ;
un détecteur côté basse pression (52) destiné à détecter la température du fluide frigorigène sur un côté basse pression du circuit de fluide frigorigène principal (10) ou la pression du fluide frigorigène sur le côté basse pression du circuit de fluide frigorigène principal (10) ou la température de l'air qui passe à travers l'échangeur de chaleur côté source de chaleur (15) ; dans lequel
le circuit de fluide frigorigène de dérivation (20) est conçu de telle sorte que le fluide frigorigène dans le circuit de fluide frigorigène de dérivation (20), ramifié à partir du tuyau (16) entre l'échangeur de chaleur côté utilisation (12) et le premier dispositif d'expansion (14), est décompressé par le second dispositif d'expansion (21), ensuite, la chaleur du fluide frigorigène est échangée avec celle du fluide frigorigène s'écoulant à travers le circuit de fluide frigorigène principal (10) par l'échangeur de chaleur intermédiaire (13) et le fluide frigorigène rejoint le fluide frigorigène qui est au coeur d'une opération de compression de l'élément rotatif de compression (11a, 11b) ;
le dispositif à cycle de réfrigération comprenant en outre un dispositif de commande (60), dans lequel, lorsqu'une valeur détectée par le détecteur côté basse pression (52) est inférieure à une valeur prédéterminée, le dispositif de commande (60) règle les degrés d'ouverture du premier dispositif d'expansion (14) et du second dispositif d'expansion (21) et
le dispositif de commande (60) rend un débit de fluide frigorigène s'écoulant à travers le second dispositif d'expansion (21) plus grand qu'un débit de fluide frigorigène s'écoulant à travers le premier dispositif d'expansion (14).

2. Dispositif à cycle de réfrigération selon la revendication 1, comprenant en outre un détecteur côté haute pression pour détecter la pression du fluide frigorigène sur un côté haute pression du circuit de fluide frigorigène principal, dans lequel, lorsqu'une valeur détectée par le détecteur côté haute pression est inférieure à une pression prédéterminée, le dispositif de commande (60) règle les degrés d'ouverture du premier dispositif d'expansion (14) et du second dispositif d'expansion (21) et rend le débit du fluide frigorigène s'écoulant à travers le second dispositif d'expansion (21) plus grand que le débit du fluide frigorigène s'écoulant à travers le premier dispositif d'expansion.

3. Dispositif à cycle de réfrigération selon la revendication 1 ou 2, dans lequel du dioxyde de carbone est utilisé en tant que fluide frigorigène et la pression du fluide frigorigène après sa décompression par le second dispositif d'expansion (21) dépasse la pression critique.

4. Dispositif de chauffage de liquide comprenant le dispositif à cycle de réfrigération selon l'une quelconque des revendications 1 à 3 et un circuit de milieu thermique côté utilisation (30), dans lequel le circuit de milieu thermique côté utilisation (30) fait circuler le milieu thermique côté utilisation par un dispositif de transport (31).

5. Dispositif de chauffage de liquide selon la revendication 4, comprenant en outre une thermistance de température de sortie de milieu thermique (53) destinée à détecter la température du milieu thermique côté utilisation qui s'écoule hors de l'échangeur de chaleur côté utilisation (12), dans lequel, lorsqu'une température détectée par la thermistance de température de sortie de milieu thermique (53) est inférieure à une température prédéterminée et qu'une différence de température entre la température prédéterminée et la température détectée par la thermistance de température de sortie de milieu thermique (53) est supérieure à une différence de température prédéterminée, le dispositif de commande (60) règle les degrés d'ouverture du premier dispositif d'expansion (14) et du second dispositif d'expansion (21) et rend le débit du fluide frigorigène s'écoulant à travers le second dispositif d'expansion (21) plus grand que le débit du fluide frigorigène s'écoulant à travers le premier dispositif d'expansion (14).
